# EUROPEAN PATENT APPLICATION

(11) **EP 2 524 923 A1**
(43) Date of publication of application: **21.11.2012**
(21) Application number: 12168289.2
(22) Date of filing: 16.05.2012
(51) Int. Cl.: C07F 7/18, C07F 7/12

(54) **Organosilicon compound and its production method, compounding agent for rubber, rubber composition, and tire**

(30) Priority: 16.05.2011 JP 2011109462
(71) Applicant: Shin-Etsu Chemical Co., Ltd., Chiyoda-ku, Tokyo (JP)
(72) Inventor: Hirokami Munenao, Annaka-shi, Gunma (JP); Tsuchida, Kazuhiro, Annaka-shi, Gunma (JP)
(74) Representative: Stoner, Gerard Patrick

(57) **Abstract**

A method for producing a sulfur-containing organosilicon compound capable of dramatically reducing hysteresis loss of the cured rubber composition and improving abrasion resistance and its production method are provided. A compounding agent for rubber containing the sulfur-containing organosilicon compound, a rubber composition prepared by blending such compounding agent for rubber, and a tire produced by using the cured rubber composition are also provided. The sulfur-containing organosilicon compound has a hydrolyzable silyl group, amino group, and mercapto group.

## Description

### TECHNICAL FIELD

This invention relates to an organosilicon compound having a hydrolyzable silyl group, mercapto group, and amino group in the molecule and its production method. This invention also relates to a compounding agent for rubber containing such organosilicon compound, a rubber composition prepared by compounding such compounding agent for rubber, and a tire prepared by using such rubber composition.

### BACKGROUND

Sulfur-containing organosilicon compounds are useful as a component for blending in silica-reinforced rubber composition used for the production of a tire. The silica-reinforced tire exhibits improved properties, and in particular, improved abrasion resistance, rolling resistance, and wet grip in automobile applications. These properties are closely related to the improvement of the low fuel consumption property of the tire, and active studies have been carried out.

As described above, increase in the silica content in the rubber composition is required for the realization of the low fuel consumption. However, silica-reinforced rubber compositions suffered from high viscosity before the vulcanization, and this resulted in the need of multiple-step kneading and low workability despite the decrease of the rolling resistance and the increase of the wet grip of the tire. Accordingly, a rubber composition prepared by simply blending an inorganic filler such as silica suffered from the problems of insufficient filler dispersion which resulted in the drastic loss of strength at breakage and abrasion resistance. In view of such situation, a sulfur-containing organosilicon compound had been required for improving the dispersibility of the inorganic filler in the rubber and realizing chemical bonding of the filler with the rubber matrix.

Examples of the known effective sulfur-containing organosilicon compound include a compound containing an alkoxysilyl group and a polysulfide silyl group in the molecule, for example, bis-triethoxysilylpropyl tetrasulfide and bis-triethoxysilylpropyl disulfide.

In addition to the organosilicon compound having a polysulfide group, also known are thioester-type organosilicon compound containing capped mercapto group which is advantageous for silica dispersion; and sulfur-containing organosilicon compound having an aminoalcohol compound transesterified to the hydrolyzable silyl group moiety which is advantageous in view of the affinity for silica by hydrogen bond.

However, a rubber composition for tire which has realized the desired low fuel consumption has not yet been realized by the use of such sulfur-containing organosilicon compounds. Examples of the remaining problems include higher cost compared to the sulfide-type compound and insufficient productivity due to the complicated production method.

The following literatures disclose prior art technologies relating to the present invention.

### Citation List

Patent Document 1: JP-B S51-20208
Patent Document 2: JP-T 2004-525230
Patent Document 3: JP-A 2004-18511
Patent Document 4: JP-A 2005-8639
Patent Document 5: JP-A 2002-145890
Patent Document 6: JP-A 2008-150546
Patent Document 7: JP-A 2010-132604
Patent Document 8: JP 4571125
Patent Document 9: USSN 2005/0245754
Patent Document 10: USP 6229036
Patent Document 11: USP 6414061

### THE INVENTION

The present invention has been completed in view of the situation as described above. An object herein is to address the problems of the prior art, and provide sulfur-containing organosilicon compounds which can markedly reduce hysteresis loss in a corresponding cured reinforced rubber composition and improve abrasion resistance thereof. Another aspect is production methods for such compounds. Further aspects are compounding agents for rubber containing such organosilicon compounds, rubber compositions prepared by blending such compounding agents, and tires produced using such rubber compositions and curing. Also, the corresponding methods.

In order to achieve the objects as described above, the inventors of the present invention made an intensive study and found that a rubber composition prepared by using a compounding agent for rubber mainly comprising a sulfur-containing organosilicon compound having a hydrolyzable silyl group, amino group, and mercapto group satisfies the requirements of low fuel consumption tires. The present invention has been completed on the bases of such findings.

Accordingly, the present invention provides an organosilicon compound and its production method, a compounding agent for rubber, a rubber composition, and a tire as described below.
[1] An organosilicon compound represented by the following formula (1): 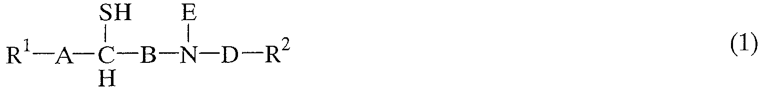 wherein R¹ is a group selected from hydrolyzable silyl group, alkyl group, vinyl group, amino group, mercapto group, and epoxy group, and R² is a group selected from hydrolyzable silyl group, alkyl group, vinyl group, amino group, mercapto group, and epoxy group, with the proviso that at least one of R¹ and R² is a hydrolyzable silyl group represented by the following general formula (2): 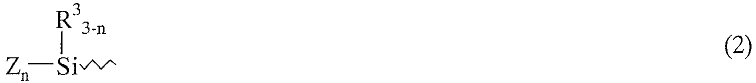 wherein wavy line represents a bond, R³ is independently an alkyl group containing 1 to 10 carbon atoms or an aryl group containing 6 to 10 carbon atoms, Z is independently a halogen atom or -OR⁴ wherein R⁴ is a monovalent hydrocarbon group containing 1 to 20 carbon atoms optionally intervened with oxygen atom or a carbonyl group, and n is an integer of 1 to 3; A, B, and D are independently a substituted or unsubstituted divalent hydrocarbon group optionally intervened with a hetero atom selected from oxygen atom, sulfur atom, and nitrogen atom and/or carbonyl carbon, with the proviso that A and B may together represent a cyclic structure linked by an alkylene group; and E is hydrogen atom or a substituted or unsubstituted monovalent hydrocarbon group optionally intervened with a hetero atom selected from oxygen atom, sulfur atom, and nitrogen atom, or a carbonyl carbon.
[2] An organosilicon compound according to [1] wherein the amino group of the R¹ and R² is the group represented by the general formula (11), the mercapto group of the R¹ and R² is the group represented by the formula (12), and the epoxy group of the R¹ and R² is the group represented by the general formula (13): 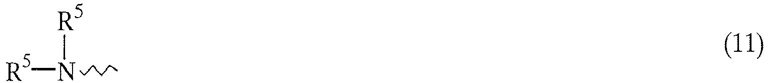 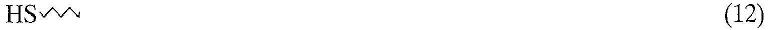 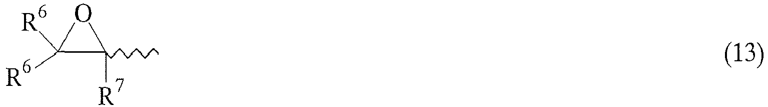 wherein wavy line represents a bond, R⁵ is independently hydrogen atom, an alkyl group containing 1 to 10 carbon atoms, or an aryl group containing 6 to 10 carbon atoms, or two R⁵S may together form a cyclic structure containing 4 to 10 carbon atoms linked by an alkylene group, R⁶ and R⁷ are independently hydrogen atom, an alkyl group containing 1 to 10 carbon atoms, or an aryl group containing 6 to 10 carbon atoms, or R⁶ and R⁷ may together form a cyclic structure containing 4 to 10 carbon atoms linked by an alkylene group.
[3] The organosilicon compound according to [1] wherein the organosilicon compound is represented by the following formula (3): 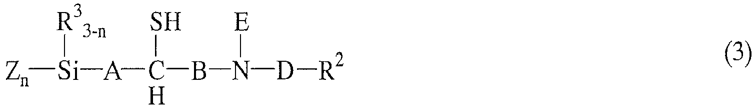 wherein A, B, D, E, Z, R², R³, and n are as defined above.
[4] The organosilicon compound according to [1] wherein the organosilicon compound is represented by the following formula (4): 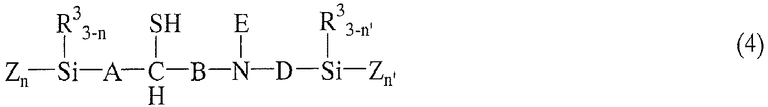 wherein A, B, D, E, and n are as defined above, Z and R³ are independently as defined above, and n' is an integer of 1 to 3.
[5] The organosilicon compound according to [1] wherein the organosilicon compound is represented by the following formula (5): 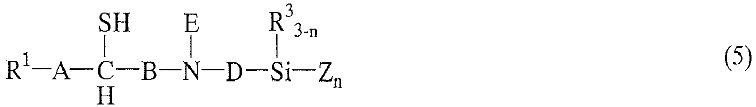 wherein A, B, D, E, Z, R¹, R³, and n are as defined above.
[6] An organosilicon compound according to [1] wherein the organosilicon compound is selected from the structures represented by the following general formulae (6) to (8): 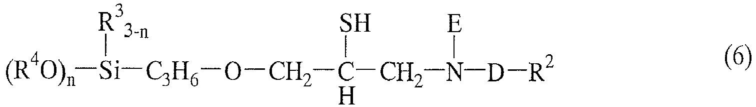 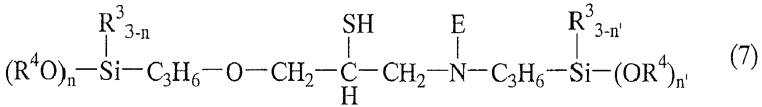 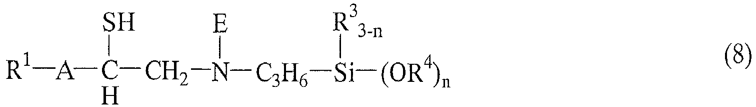 wherein A, D, E, R¹, R², R³, R⁴, and n are as defined above, and n' is an integer of 1 to 3.
[7] A method for producing the organosilicon compound of any one of [1] to [6] comprising the step of reacting an organosilicon compound containing at least one episulfide group and a compound having at least one primary amino group and/or secondary amino group.
[8] A method for producing the organosilicon compound of [7] wherein the organosilicon compound containing at least one episulfide group is at least one selected from the group consisting of compounds of formulae (14) to (17): 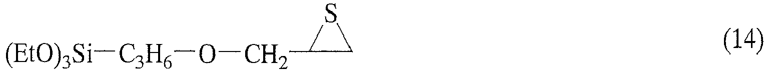 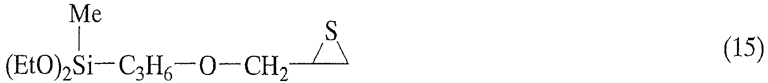 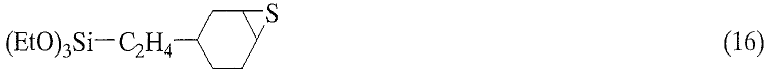 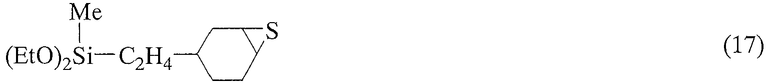 and/or in which the compound having primary and/or secondary amino group is at least one selected from the group consisting of propylamine, isopropylamine, butylamine, isobutylamine, dodecylamine, stearylamine, dibutylamine, dicyclohexylamine, and piperazine.
[9] A method for producing the organosilicon compound of any one of [1] to [6] comprising the step of reacting an organosilicon compound containing at least one primary amino group and/or secondary amino group and a compound having at least one episulfide group.
[10] A method for producing the organosilicon compound of [9] wherein the organosilicon compound containing at least one primary amino group and/or secondary amino group is at least one selected from the group consisting of α-aminomethyltrimethoxysilane,
   α -aminomethylmethyldimethoxysilane,
   α -aminomethyldimethylmethoxysilane,
   α -aminomethyltriethoxysilane,
   α -aminomethylmethyldiethoxysilane,
   α -aminomethyldimethylethoxysilane,
   γ -aminopropyltrimethoxysilane,
   γ -aminopropylmethyldimethoxysilane,
   γ -aminopropyldimethylmethoxysilane,
   γ -aminopropyltriethoxysilane,
   γ -aminopropylmethyldiethoxysilane,
   γ -aminopropyldimethylethoxysilane,
   N-2(aminoethyl)α-aminomethyltrimethoxysilane,
   N-2(aminoethyl)α-aminomethylmethyldimethoxysilane,
   N-2(aminoethyl)α-aminomethyldimethylmethoxysilane,
   N-2(aminoethyl)α-aminomethyltriethoxysilane,
   N-2(aminoethyl)α-aminomethylmethyldiethoxysilane,
   N-2(aminoethyl)α-aminomethyldimethylethoxysilane, bis-(trimethoxysilylpropyl)amine,
   bis-(methyldimethoxysilylpropyl)amine,
   bis-(dimethylmethoxysilylpropyl)amine,
   bis-(triethoxysilylpropyl)amine,
   bis-(methyldiethoxysilylpropyl)amine, and
   bis-(dimethylethoxysilylpropyl)amine,
   and/or wherein the compound having episulfide group is at least one selected from the group consisting of compounds of the following formulae (18) to (21): 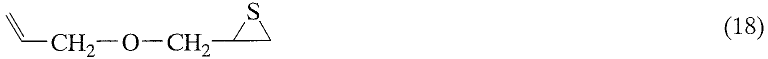 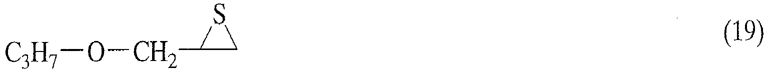 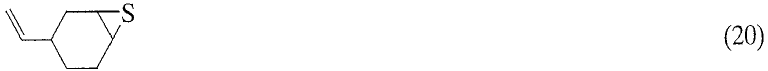 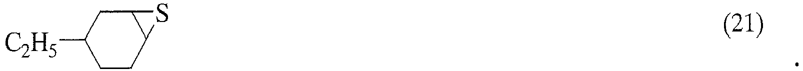
[11] A method for producing the organosilicon compound of any one of [1] to [6] comprising the step of reacting an organosilicon compound containing at least one primary amino group and/or secondary amino group and an organosilicon compound containing at least one episulfide group.
[12] A method for producing the organosilicon compound of [11] wherein the organosilicon compound containing at least one episulfide group is at least one selected from the group consisting of compounds of formulae (14) to (17): 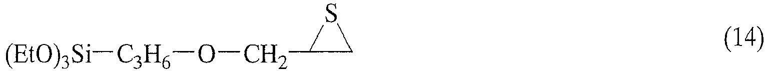 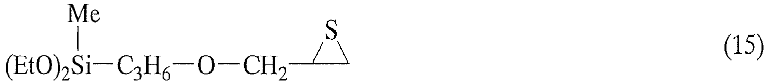 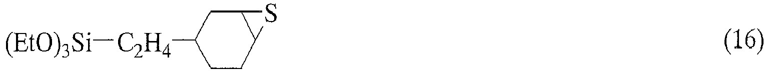 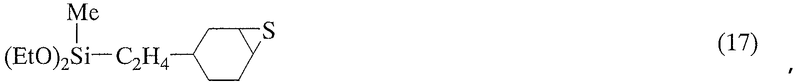 and
   and/or that containing primary and/or secondary amino is at least one selected from the group consisting of α-aminomethyltrimethoxysilane,
   α -aminomethylmethyldimethoxysilane,
   α -aminomethyldimethylmethoxysilane,
   α -aminomethyltriethoxysilane,
   α -aminomethylmethyldiethoxysilane,
   α -aminomethyldimethylethoxysilane,
   γ -aminopropyltrimethoxysilane,
   γ -aminopropylmethyldimethoxysilane,
   γ -aminopropyldimethylmethoxysilane,
   γ -aminopropyltriethoxysilane,
   γ -aminopropylmethyldiethoxysilane,
   γ -aminopropyldimethylethoxysilane,
   N-2(aminoethyl)α-aminomethyltrimethoxysilane,
   N-2(aminoethyl)α-aminomethylmethyldimethoxysilane,
   N-2(aminoethyl)α-aminomethyldimethylmethoxysilane,
   N-2(aminoethyl)α-aminomethyltriethoxysilane,
   N-2(aminoethyl)α-aminomethylmethyldiethoxysilane,
   N-2(aminoethyl)α-aminomethyldimethylethoxysilane, bis-(trimethoxysilylpropyl)amine,
   bis-(methyldimethoxysilylpropyl)amine,
   bis-(dimethylmethoxysilylpropyl)amine,
   bis-(triethoxysilylpropyl)amine,
   bis-(methyldiethoxysilylpropyl)amine, and
   bis-(dimethylethoxysilylpropyl)amine.
   The compound having at least one episulfide group may be selected from the group consisting of compounds of the following formulae (18) to (21): 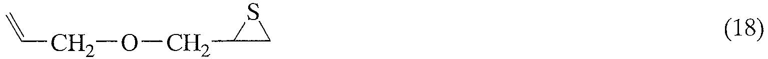 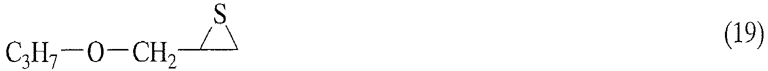 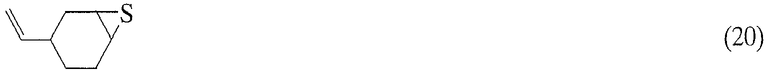 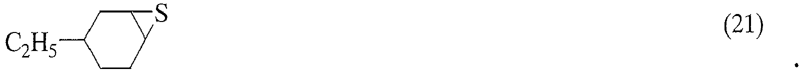
[13] A compounding agent for rubber containing the organosilicon compound of any one of [1] to [6].
[14] A compounding agent for rubber according to [13] further comprising
   (B) at least one powder at an amount such that weight ratio of the organosilicon compound (A) to the at least one powder (B) ((A)/(B)) is from 70/30 to 5/95.
[15] A rubber composition prepared by blending the compounding agent for rubber of [13] or [14].
[16] A tire produced by using a cured product of the rubber composition of [15].

### ADVANTAGEOUS EFFECTS

The organosilicon compounds proposed herein have a hydrolysable silyl group, mercapto group, and amino group. In silica-reinforced rubber compositions prepared using a compounding agent for rubber containing this organosilicon compound as main component, we find reactivity and dispersibility near the silica will be increased by the interaction between the amino group in the compound and the silica in the rubber. Accordingly, the tire prepared by using the rubber composition experiences a dramatically reduced hysteresis loss, and the resulting tire contributes to desirable low fuel consumption.

### FURTHER EXPLANATIONS; OPTIONS AND PREFERENCES

Next, the present invention is described in detail. In the present invention, "silane coupling agent" is included in "organosilicon compound".

### Organosilicon compound (silane coupling agent)

The organosilicon compound of the present invention (silane coupling agent) is the one represented by the following formula (1): 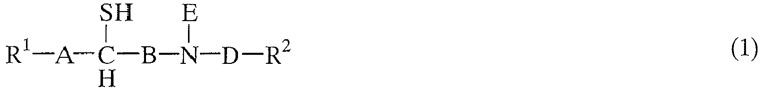 wherein R¹ is a group selected from hydrolyzable silyl group, alkyl group, vinyl group, amino group, mercapto group, and epoxy group, R² is a group selected from hydrolyzable silyl group, alkyl group, vinyl group, amino group, mercapto group, and epoxy group, with the proviso that one of R¹ and R² is a hydrolyzable silyl group represented by the following general formula (2): 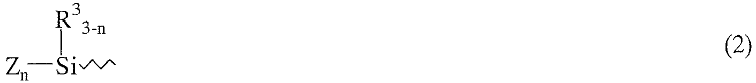 wherein wavy line represents a bond (this applies to the following description); R³ is independently an alkyl group containing 1 to 10 carbon atoms or an aryl group containing 6 to 10 carbon atoms, Z is independently a halogen atom or -OR⁴ wherein R⁴ is a monovalent hydrocarbon group containing 1 to 20 carbon atoms optionally intervened by oxygen atom or carbonyl group, and n is an integer of 1 to 3; A, B, and D are independently a substituted or unsubstituted divalent hydrocarbon group optionally intervened by a hetero atom selected from oxygen atom, sulfur atom, and nitrogen atom and/or carbonyl carbon, with the proviso that A and B may together represent a cyclic structure linked by an alkylene group; and E is hydrogen atom or a monovalent hydrocarbon group optionally intervened by a hetero atom selected from oxygen atom, sulfur atom, and nitrogen atom or carbonyl carbon.

The organosilicon compound of the present invention (the silane coupling agent) represented by the general formula (1) as described above has the characteristic feature that it has all of the following structures (i), (ii), and (iii):
(i) a hydrolyzable silyl group,
(ii) mercapto group, and
(iii) amino group.

In the formula (1), R¹ and R² are a hydrolyzable silyl group represented by the following formula (2): 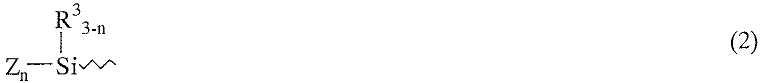 wherein R³ is independently an alkyl group containing 1 to 10, preferably 1 to 6 carbon atoms or an aryl group containing 6 to 10 carbon atoms such as methyl group, ethyl group, and phenyl group,
Z is independently a halogen atom or -OR⁴ wherein R⁴ is a monovalent hydrocarbon group containing 1 to 20, preferably 1 to 18 carbon atoms optionally intervened by oxygen atom or carbonyl group. Preferably -OR⁴ is alkoxy group (wherein the alkyl moiety may be interrupted by oxygen e.g. ether oxygen), alkenyloxy group, an acyloxy group containing 1 to 20, preferably 1 to 10 carbon atoms, or an aryloxy group containing 6 to 10 carbon atoms. The alkoxy group intervened by oxygen atom includes an alkoxyalkoxy group and an alkyleneglycol monoalkylether group. Examples of Z include chlorine atom, bromine atom, methoxy group, ethoxy group, propoxy group, propenoxy group, acetoxy group, methoxymethoxy group, methoxyethoxy group, ethoxymethoxy group, and ethyleneglycol monoalkylether group, and
n is an integer of 1 to 3, and preferably 2 or 3.

In the formula (1), the alkyl group of R¹ and R² may be, for example, a monovalent structural group represented by the following general formula (9): 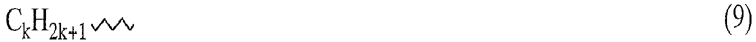 wherein k is an integer of 1 to 20, and preferably 1 to 10.

Exemplary such alkyl groups include methyl group, ethyl group, propyl group, butyl group, pentyl group, cyclopentyl group, hexyl group, cyclohexyl group, heptyl group, octyl group, nonyl group, and decyl group.

The vinyl group of R¹ and R² may be, for example, a monovalent structural group represented by the following general formula (10): 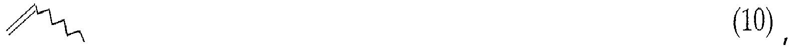 and
the amino group may be, for example, a monovalent structural group represented by the following general formula (11): 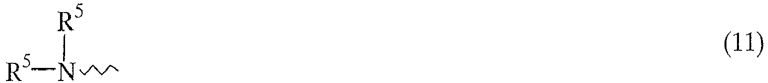 wherein R⁵ is independently hydrogen atom, an alkyl group containing 1 to 10, and preferably 1 to 6 carbon atoms, or an alkyl group or an aryl group containing 6 to 10 carbon atoms, or two R⁵s may together represent a cyclic structure containing 4 to 10, and preferably 4 to 8 carbon atoms linked by an alkylene group, for example, an aliphatic hydrocarbon group such as methyl group, ethyl group, propyl group, butyl group, pentyl group, cyclopentyl group, hexyl group, cyclohexyl group, heptyl group, octyl group, nonyl group, or decyl group or an aromatic hydrocarbon group such as phenyl group, naphthyl group, or styryl group.

Exemplary structures of the amino group include primary amino group, secondary amino groups such as methylamino group, ethylamino group, propylamino group, butylamino group, cyclohexylamino group, and phenylamino group, and tertiary amino groups such as dimethylamino group, diethylamino group, dipropylamino group, dibutylamino group, dicyclohexyl amino group, diphenylamino group, and pyridinyl group.

The mercapto group of R¹ and R² may be, for example, a monovalent structural group represented by the following general formula (12): 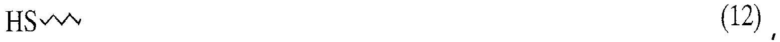 and the epoxy group may be, for example, a monovalent structural group represented by the following general formula (13): 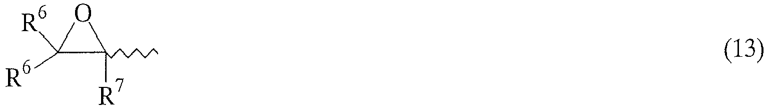 wherein R⁶ and R⁷ independently represent hydrogen atom, an alkyl group containing 1 to 10, and preferably 1 to 6 carbon atoms, or an aryl group containing 6 to 10 carbon atoms, or R⁶ and R⁷ may together represent a cyclic structure containing 4 to 10, and preferably 4 to 8 carbon atoms linked by an alkylene group, and examples include aliphatic hydrocarbon groups such as methyl group, ethyl group, propyl group, butyl group, pentyl group, cyclopentyl group, hexyl group, cyclohexyl group, heptyl group, octyl group, nonyl group, and decyl group and aromatic hydrocarbon groups such as phenyl group, naphthyl group, and styryl group.

Exemplary structures of the epoxy group include ethylene oxide group, propylene oxide group, butene oxide group, pentene oxide group, hexene oxide group, styrene oxide group, and cyclohexene oxide group.

A, B, and D independently are substituted or unsubstituted divalent hydrocarbon groups. They may be intervened (interrupted) by one or more heteroatoms, selected from oxygen, sulfur and nitrogen atoms, or carbonyl carbon. The divalent hydrocarbon group is preferably a straight, branched, or cyclic divalent hydrocarbon group containing 1 to 20 carbon atoms, and more preferably, 3 to 18 carbon atoms. Exemplary divalent hydrocarbon groups include alkylene groups such as methylene group, ethylene group, propylene group (trimethylene group, methylethylene group), butylene group (tetramethylene group, methylpropylene group), hexamethylene ring, and octamethylene group, arylene groups such as phenylene group, and combinations of two or more of such groups (e.g. alkylene-arylene group).

Examples of the divalent hydrocarbon group intervened by a hetero atom selected from oxygen atom, sulfur atom, and nitrogen atom and/or carbonyl carbon include divalent hydrocarbon groups intervened by 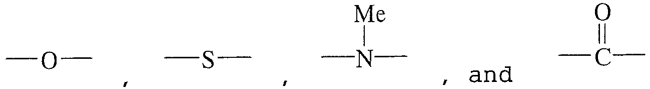 wherein Me represents methyl group. Thus heteroatom is in the chain as ether, thioether, or as secondary or tertiary amino N. Examples of the substituted divalent hydrocarbon groups include divalent hydrocarbon groups intervened by substituents such as 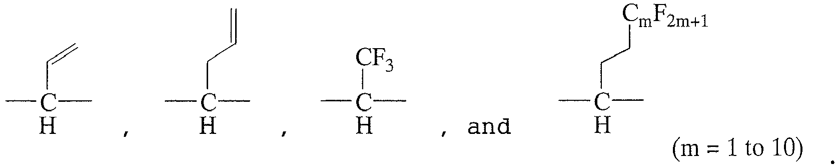 A and B may also together represent a cyclic structure linked by an alkylene group. A and B may be linked by alkylene group to form a cyclic structure.

E is hydrogen atom or a substituted or unsubstituted monovalent hydrocarbon group optionally intervened by a hetero atom selected from oxygen atom, sulfur atom, and nitrogen atom and/or carbonyl carbon, and the monovalent hydrocarbon group is preferably a straight, branched, or cyclic monovalent hydrocarbon group containing 1 to 20, and more preferably 3 to 18 carbon atoms. Exemplary such monovalent hydrocarbon groups include alkyl groups such as methyl group, ethyl group, propyl group, isopropyl group, butyl group, isobutyl group, tert-butyl group, pentyl group, neopentyl group, hexyl group, and octyl group, cycloalkyl groups such as cyclohexyl group, alkenyl groups such as vinyl group, allyl group, and propenyl group, aryl groups such as alkenyl group, phenyl group, tolyl group, xylyl group, and naphthyl group, and aralkyl groups such as benzyl group, phenylethyl group, and phenylpropyl group.

Examples of the monovalent hydrocarbon group intervened by a hetero atom selected from oxygen atom, sulfur atom, and nitrogen atom and/or carbonyl carbon include, as above, monovalent hydrocarbon groups intervened by 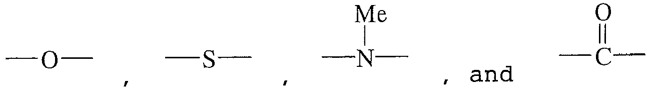 wherein Me represents methyl group, and examples of the substituted or unsubstituted monovalent hydrocarbon groups include monovalent hydrocarbon groups intervened by substituents such as

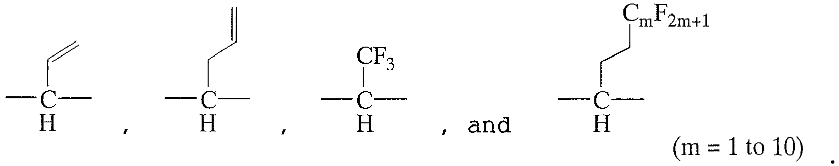

Examples of the organosilicon compound represented by the general formula (1) include those represented by the following general formula (3) to (5): 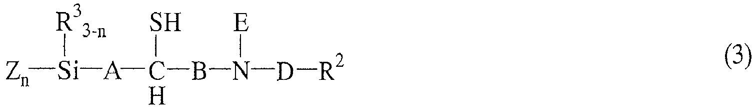 wherein A, B, D, E, Z, R², R³, and n are as defined above, 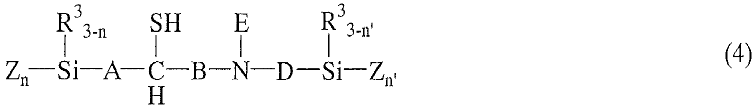 wherein A, B, D, E, Z, R³, and n are as defined above (Z and R³ are independently the same or different) and n' is an integer of 1 to 3, and preferably 2 or 3, and 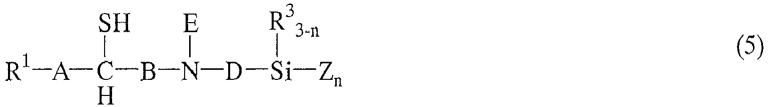 wherein A, B, D, E, Z, R¹, R³, and n are as defined above.

More specifically, such groups may be those represented by the following general formula (6) to (8): 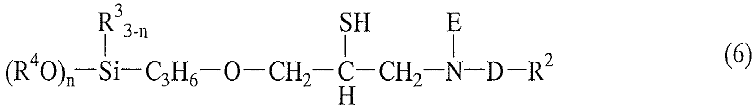 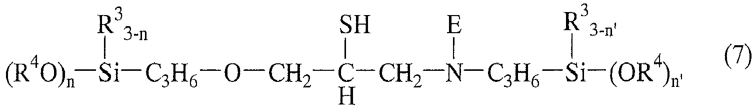 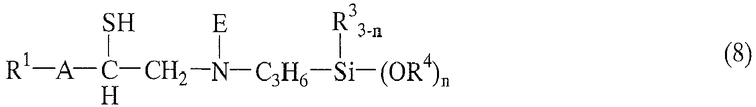 wherein A, D, E, R¹, R², R³, n, and n' are as defined above, R⁴ is independently a monovalent hydrocarbon group containing 1 to 20 carbon atoms optionally intervened with oxygen atom or carbonyl group. The R³ and R⁴ in the same molecule may be the same or different.

In the formula, R⁴ is as defined above.

The organosilicon compound of the present invention may be obtained by reacting an organosilicon compound containing at least one episulfide group with a compound containing at least one primary amino group and/or secondary amino group, by reacting an organosilicon compound containing at least one primary amino group and/or secondary amino group with a compound containing at least one episulfide group, or by reacting an organosilicon compound containing at least one episulfide group with an organosilicon compound containing at least one primary amino group and/or secondary amino group.

The organosilicon compound containing episulfide group which is necessary as a starting material in producing the organosilicon compound of the present invention is not particularly limited. However, the organosilicon compound containing episulfide group is preferably the one containing a hydrolyzable silyl group, and non-limiting examples include compounds represented by the following formulae (14) to (17).

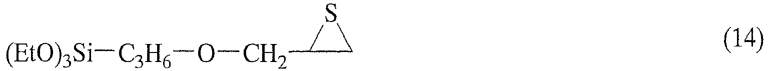

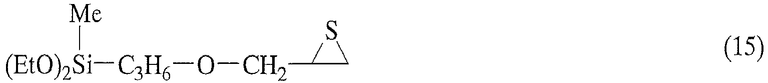

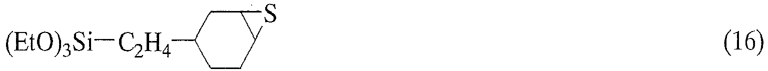

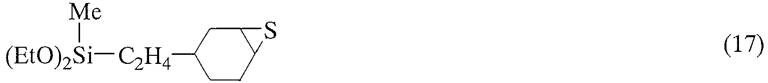

This compound may be produced by reacting the corresponding epoxy compound with an episulfiding agent in a polar solvent. Exemplary episulfiding agents include thiourea and potassium thiocyanate and exemplary polar solvents include ethanol, acetone, and toluene.

The organosilicon compound containing a primary amino group and/or a secondary amino group which is a critical starting material in producing the organosilicon compound of the present invention is not particularly limited. However, this organosilicon compound is preferably the one containing a hydrolyzable silyl group, and non-limiting examples include α-aminomethyltrimethoxysilane,
α -aminomethylmethyldimethoxysilane,
α -aminomethyldimethylmethoxysilane,
α -aminomethyltriethoxysilane,
α -aminomethylmethyldiethoxysilane,
α -aminomethyldimethylethoxysilane,
γ -aminopropyltrimethoxysilane,
γ -aminopropylmethyldimethoxysilane,
γ -aminopropyldimethylmethoxysilane,
γ -aminopropyltriethoxysilane,
γ -aminopropylmethyldiethoxysilane,
γ -aminopropyldimethylethoxysilane,
N-2(aminoethyl)α-aminomethyltrimethoxysilane,
N-2(aminoethyl)α-aminomethylmethyldimethoxysilane,
N-2(aminoethyl)α-aminomethyldimethylmethoxysilane,
N-2(aminoethyl)α-aminomethyltriethoxysilane,
N-2(aminoethyl)α-aminomethylmethyldiethoxysilane,
N-2(aminoethyl)α-aminomethyldimethylethoxysilane, bis-(trimethoxysilylpropyl)amine,
bis-(methyldimethoxysilylpropyl)amine,
bis-(dimethylmethoxysilylpropyl)amine,
bis-(triethoxysilylpropyl)amine,
bis-(methyldiethoxysilylpropyl)amine, and
bis-(dimethylethoxysilylpropyl)amine.

The compound containing episulfide group which is the starting material critical in producing the organosilicon compound of the present invention is not particularly limited. Exemplary non-limiting compounds include those represented by the following formulae (18) to (21):

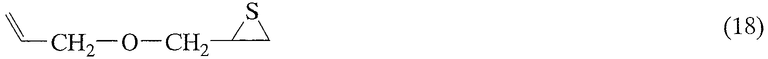

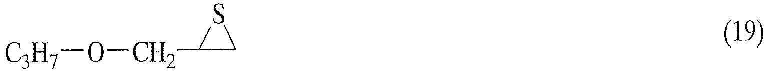

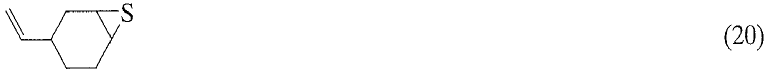

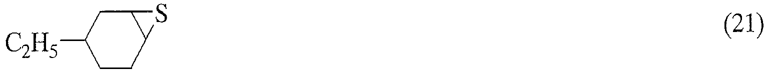

This compound may be produced by reacting the corresponding epoxy compound with an episulfiding agent in a polar solvent. Exemplary episulfiding agents include thiourea and potassium thiocyanate and exemplary polar solvents include ethanol, acetone, and toluene.

The compound containing a primary amino group and/or a secondary amino group which is a critical starting material in producing the organosilicon compound of the present invention is not particularly limited. Non-limiting commercially available such compound include propylamine, isopropylamine, butylamine, isobutylamine, dodecylamine, stearylamine, dibutylamine, dicyclohexylamine, and piperazine.

In producing the organosilicon compound of the present invention, blend ratio of the organosilicon compound containing episulfide group to the compound containing primary amino group and/or secondary amino group; blend ratio of the organosilicon compound containing primary amino group and/or secondary amino group to the compound containing episulfide group; and blend ratio of the organosilicon compound containing episulfide group to the organosilicon compound containing primary amino group and/or secondary amino group is preferably such that the primary amino group and/or secondary amino group is 0.5 to 1.5 mol, and in particular, 0.7 to 1.3 mol in relation to 1 mol of the episulfide group in view of the reactivity and productivity. When the amount of the episulfide compound blended is too small, amino group will remain unreacted, and while this amino group does not adversely affect physical properties of the silane, risk of scorching increases when used as a compounding agent for rubber. Excessive use may invite polymerization and gelation of the episulfide compound.

By such reaction between the episulfide group and the amino group having active hydrogen, a structure having mercapto group and amino group are formed, and the organosilicon compound of the present invention is thereby obtained.

While two reaction sites may be present in the reaction between the episulfide group and the amino group having active hydrogen group, the reaction toward carbon with low steric hindrance results in the formation of the organosilicon compounds having the structure represented by the formulae (6) to (8) as main products.

If necessary, a solvent may be used in the production of the organosilicon compound of the present invention. The solvent is not particularly limited as long as it does not react with the organosilicon compound containing episulfide group, the organosilicon compound containing primary amino group or secondary amino group, the compound containing episulfide group, and the compound containing at least one primary amino group or secondary amino group, and the like as described above used as the stating material. Exemplary such solvents include aliphatic hydrocarbon solvents such as pentane, hexane, heptane, and decane, ether solvents such as diethylether, tetrahydrofuran, and 1,4-dioxane, amide solvents such as formamide, dimethylformamide, and N-methyl pyrrolidone, and aromatic hydrocarbon solvents such as benzene, toluene, and xylene.

In producing the organosilicon compound of the present invention, the reaction is preferably conducted at a temperature in the range of 30 to 150°C, preferably 40 to 120°C, and more preferably 50 to 100°C. Excessively low reaction temperature may result in reduced reaction speed and excessively high reaction temperature is uneconomical since the reaction speed is saturated with no further improvement.

The reaction time required for producing the organosilicon compound of the present invention is preferably about 10 minutes to 24 hours, and more preferably about 1 to 10 hours.

The compounding agent for rubber of the present invention contains the organosilicon compound (A) as described above. The organosilicon compound (A) of the present invention may also be preliminarily blended with at least one powder (B), and then used as a compounding agent for rubber. Examples of the powder (B) include carbon black, talc, calcium carbonate, stearic acid, silica, aluminum hydroxide, alumina, and magnesium hydroxide which are commonly used as a filler in various rubber composition. In view of the reinforcement performance, the preferred are silica and aluminum hydroxide, and the most preferred is silica. The use of compound (A) as compounding agent for dispersal of powder filler (B) in a rubber compound, especially tire rubber compound, is an aspect of the invention, as is a corresponding tire manufacture method.

The powder (B) may be blended at a weight ratio of the component (A)/the component (B) of 70/30 to 5/95, and more preferably 60/40 to 10/90. When the amount of the powder (B) is too small, the resulting compounding agent for rubber will be liquid, and introduction into the rubber kneader may become difficult. When the amount of the powder (B) is too large, volume of the entire rubber will be too large in relation to the effective amount of the compounding agent for rubber, and this in turn results in the increased transportation cost.

The compounding agent for rubber of the present invention may also contain an organic polymer or a rubber such as a fatty acid, fatty acid salt, polyethylene, polypropylene, polyoxyalkylene, polyester, polyurethane, polystyrene, polybutadiene, polyisoprene, natural rubber, or styrene-butadiene copolymer, and an additive commonly blended in tire or other rubbers such as vulcanizer, crosslinking agent, vulcanization accelerator, crosslinking accelerator, oil, antiaging agent, filler, plasticizer, or the like at an amount not adversely affecting the objects of the present invention. In addition, the compounding agent for rubber of the present invention may be either in the form of liquid, solid, dilution or emulsion in an organic solvent.

Use of the rubber-compounding agent of the present invention is preferable for a silica-containing rubber composition.

In this case, the compounding agent for rubber is used at an amount in terms of the organosilicon compound of the present invention of 0.2 to 30 parts by weight, and in particular, at 1 to 20 parts by weight in relation to 100 parts by weight of the filler (the entire filler containing the powder (B)) blended in the rubber composition. The desired rubber property may not be obtained when the organosilicon compound is added at an excessively small amount, while excessive addition is uneconomical due to the saturation of the effect in relation to the amount added.

The rubber blended as the main component in the rubber composition prepared by using the compounding agent for rubber of the present invention may be any rubber which has been commonly blended in the rubber composition, for example, natural rubber (NR), a diene rubber such as isoprene rubber (IR), a styrene-butadiene copolymer rubber (SBR), a polybutadiene rubber (BR), an acrylonitrile-butadiene copolymer rubber (NBR), and a butyl rubber (IIR), an ethylene-propylene copolymer rubber (EPR, EPDM), which may be used alone or as a blend of two or more. Exemplary fillers blended in the composition include silica, talc, clay, aluminum hydroxide, magnesium hydroxide, calcium carbonate, and titanium oxide. The filler in total containing the powder (B) is preferably added at an amount of 20 to 2,000 parts by weight, and in particular 40 to 1,000 parts by weight in relation to 100 parts by weight of the rubber.

In addition to the critical components as described above, the rubber composition containing the compounding agent for rubber of the present invention may also contain various additives such as a vulcanizer, crosslinking agent, vulcanization accelerator, crosslinking accelerator, oil, antiaging agent, filler, plasticizer and the like commonly blended in the tire as well as other common rubbers. These additives may be added at an amount commonly used in the art not detracting from the objects of the present invention.

In the rubber composition as described above, the organosilicon compound of the present invention may also be used instead of the known silane coupling agent. However, another silane coupling agent may be optionally added to the extent not adversely affecting the objects of the present invention. Such silane coupling agent used may be any agent which has been used with a silica filler, and typical examples include vinyltrimethoxysilane, vinyltriethoxysilane,
γ -glycidoxypropyltrimethoxysilane,
γ -glycidoxypropyltriethoxysilane,
γ -aminopropyltriethoxysilane,
β -aminoethyl-γ-aminopropyltrimethoxysilane,
β -aminoethyl-γ-aminopropyltriethoxysilane,
γ -mercaptopropyltrimethoxysilane,
γ -mercaptopropyltriethoxysilane,
γ -methacryloxypropyltrimethoxysilane,
γ -methacryloxypropyltriethoxysilane,
γ -acryloxypropyltrimethoxysilane,
γ -acryloxypropyltriethoxysilane,
bis-triethoxysilylpropyl tetrasulfide, and
bis-triethoxysilylpropyl disulfide.

The rubber composition prepared by blending the compounding agent for rubber of the present invention may be prepared by kneading in a method commonly used in the art to prepare the composition, and the composition may be used for vulcanization or crosslinking conducted under the conditions normally used in the art.

The tire of the present invention is prepared by using the rubber composition as described above, and the cured product of the rubber composition as described above is preferably used for the tread. The tire of the present invention has markedly reduced rolling resistance as well as a remarkably reduced abrasion resistance. The tire of the present invention is not particularly limited for its structure as long as it is a conventional known structure, and the tire may be produced by a method commonly used in the art. When the tire of the present invention is a pneumatic tire, examples of the gas filled in the tire may be normal air and air having an adjusted oxygen partial pressure, and inert gases such as nitrogen, argon, and helium.

### EXAMPLES

Next, the present invention is described in further detail by referring to Preparation Examples, Examples, and Comparative Examples, which by no means limit the scope of the present invention. In the following Examples, "part" means "part by weight" and the viscosity and the refractive index are the values measured at 25°C. NMR is an abbreviation for nuclear magnetic resonance spectroscopy. The viscosity is based on measurement at 25°C using a capillary dynamic viscometer.

### Preparation Example 1

A 2 L separable flask equipped with an agitator, a reflux condenser, a dropping funnel, and a thermometer was charged with 556.8 g (2.0 mol) of γ-glycidoxypropyltriethoxysilane (KBE-403 manufactured by Shin-Etsu Chemical Co., Ltd.), 213.1 g (2.8 mol) of thiourea, and 400.0 g acetone, and the mixture was heated in an oil bath to a temperature of 60°C. The heating was kept with stirring at 60°C for 16 hours, and the mixture was filtered. The filtrate was concentrated in a rotary evaporator at a reduced pressure to obtain 235.6 g of the reaction product which was a pale yellow transparent liquid having a viscosity of 6.7 mm²/s and a refractive index of 1.4590. This product was confirmed by ¹H NMR spectrum to have a structure represented by the following chemical structural formula (14). ¹H NMR spectrum data of the compound was as follows.
¹H NMR (300 MHz, CDCl₃, δ (ppm)): 0.75 (t, 2H), 1.18 (t, 9H), 1.62 (m, 2H), 2.13 (d, 1H), 2.42 (d, 1H), 2.97 (m, 1H), 3.36 (m, 1H), 3.40 (t, 2H), 3.57 (m, 1H), 3.76 (t, 6H) 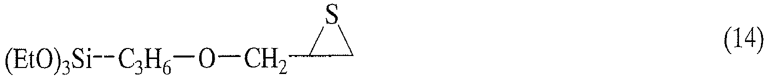 wherein Et represents ethyl group (and this applies to the following description).

### Example 1

A 2 L separable flask equipped with an agitator, a reflux condenser, a dropping funnel, and a thermometer was charged with 294.5 g (1.0 mol) of the compound (14) obtained in Preparation Example 1 and 500.0 g of tetrahydrofuran, and 87.7 g (1.2 mol) of isobutylamine was added dropwise. The mixture was heated in an oil bath to a temperature of 60°C, and the mixture was aged for 5 hours. The mixture was then concentrated in a rotary evaporator at a reduced pressure, and filtered to obtain 360.2 g of the reaction product which was a pale yellow transparent liquid having a viscosity 18.7 mm²/s and a refractive index of 1.4574. This product was confirmed by ¹H NMR spectrum to have a structure represented by the following chemical structural formula (22). ¹H NMR spectrum data of the compound was as follows.
¹H NMR (300 MHz, CDCl₃, δ (ppm)): 0.59 (t, 2H), 0.85 (d, 6H), 1.19 (t, 9H), 1.58-1.79 (m, 5H), 2.38 (m, 2H), 2.60 (m, 1H), 2.82 (m, 1H), 3.05 (m, 1H), 3.38 (m, 2H), 3.70 (m, 2H), 3.79 (t, 8H)

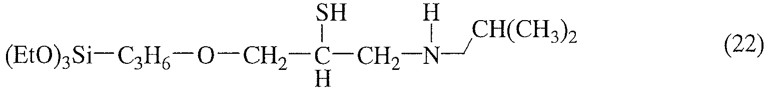

### Example 2

A 2 L separable flask equipped with an agitator, a reflux condenser, a dropping funnel, and a thermometer was charged with 294.5 g (1.0 mol) of the compound (14) obtained in Preparation Example 1 and 500.0 g of tetrahydrofuran, and 222.5 g (1.2 mol) of dodecylamine was added dropwise. The mixture was heated in an oil bath to a temperature of 60°C, and the mixture was aged for 5 hours. The mixture was then concentrated in a rotary evaporator at a reduced pressure, and filtered to obtain 455.8 g of the reaction product which was a pale yellow transparent liquid having a viscosity 25.3 mm²/s and a refractive index of 1.4590. This product was confirmed by ¹H NMR spectrum to have a structure represented by the following chemical structural formula (23). ¹H NMR spectrum data of the compound was as follows.
¹H NMR (300 MHz, CDCl₃, δ (ppm)): 0.62 (t, 2H), 0.69 (t, 3H), 1.12 (t, 9H), 1.10-1.20 (m, 18H), 1.29 (m, 2H), 1.68 (m, 2H), 1.79 (m, 2H), 2.48 (m, 3H), 2.78 (m, 1H), 2.95 (m, 1H), 3.20-3.40 (m, 4H), 3.65 (t, 9H)

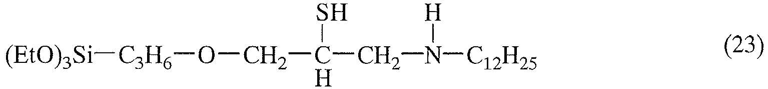

### Example 3

A 2 L separable flask equipped with an agitator, a reflux condenser, a dropping funnel, and a thermometer was charged with 294.5 g (1.0 mol) of the compound (14) obtained in Preparation Example 1 and 500.0 g of tetrahydrofuran, and 155.0 g (1.2 mol) of dibutylamine was added dropwise. The mixture was heated in an oil bath to a temperature of 60°C, and the mixture was aged for 5 hours. The mixture was then concentrated in a rotary evaporator at a reduced pressure, and filtered to obtain 406.7 g of the reaction product which was a pale yellow transparent liquid having a viscosity 13.5 mm²/s and a refractive index of 1.4545. This product was confirmed by ¹H NMR spectrum to have a structure represented by the following chemical structural formula (24). ¹H NMR spectrum data of the compound was as follows.
¹H NMR (300 MHz, CDCl₃, δ (ppm)): 0.60 (t, 2H), 0.81 (t, 3H), 1.12 (t, 9H), 1.17 (m, 4H), 1.27 (m, 4H), 1.55 (m, 2H), 2.39 (m, 6H), 2.50 (m, 1H), 2.97 (m, 1H), 3.20-3.35 (m, 3H), 3.41 (m, 1H), 3.63 (t, 9H) 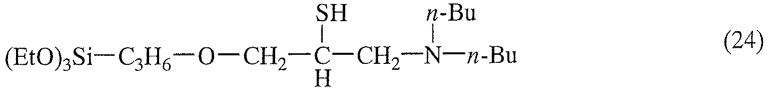 wherein n-Bu represents n-butyl group.

### Example 4

A 2 L separable flask equipped with an agitator, a reflux condenser, a dropping funnel, and a thermometer was charged with 294.5 g (1.0 mol) of the compound (14) obtained in Preparation Example 1 and 500.0 g of tetrahydrofuran, and 221.4 g (1.0 mol) of γ-aminopropyltriethoxysilane (KBE-903 manufactured by Shin-Etsu Chemical Co., Ltd.) was added dropwise. The mixture was heated in an oil bath to a temperature of 60°C, and the mixture was aged for 5 hours. The mixture was then concentrated in a rotary evaporator at a reduced pressure, and filtered to obtain 505.6 g of the reaction product which was a pale yellow transparent liquid having a viscosity 32.7 mm²/s and a refractive index of 1.4502. This product was confirmed by ¹H NMR spectrum to have a structure represented by the following chemical structural formula (25). ¹H NMR spectrum data of the compound was as follows.
¹H NMR (300 MHz, CDCl₃, δ (ppm)): 0.63 (t, 4H), 1.08 (t, 18H), 1.42 (m, 2H), 1.53 (m, 2H), 1.80 (m, 2H), 2.40-2.58 (m, 3H), 2.80 (m, 1H), 2.95 (m, 1H), 3.23-3.40 (m, 3H), 3.65 (t, 12H)

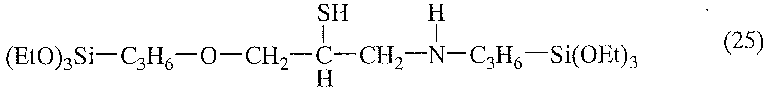

### Example 5

A 1 L separable flask equipped with an agitator, a reflux condenser, a dropping funnel, and a thermometer was charged with 112.2 g (1.0 mol) of allyl glycidyl ether, 106.6 g (1.4 mol) of thiourea, and 200.0 g of toluene, and the mixture was heated in an oil bath to a temperature of 60°C. The mixture was kept stirring by heating to 60°C for 16 hours. After filtration, 166.2 g (0.75 mol) of γ-aminopropyltriethoxysilane (KBE-903 manufactured by Shin-Etsu Chemical Co., Ltd.) was added dropwise to the filtrate. The mixture was heated in an oil bath to a temperature of 60°C, and the mixture was aged for 5 hours. The mixture was then concentrated in a rotary evaporator at a reduced pressure, and filtered to obtain 341.1 g of the reaction product which was a pale yellow transparent liquid having a viscosity 6.25 mm²/s and a refractive index of 1.4642. This product was confirmed by ¹H NMR spectrum to have a structure represented by the following chemical structural formula (26). ¹H NMR spectrum data of the compound was as follows.
¹H NMR (300 MHz, CDCl₃, δ (ppm)): 0.63 (t, 2H), 1.09 (t, 9H), 1.44 (m, 2H), 1.71 (m, 2H), 2.43-2.60 (m, 3H), 2.78 (m, 3H), 2.99 (m, 1H), 3.40 (m, 2H), 3.70 (t, 9H), 3.82 (t, 2H), 5.07 (dd, 2H), 5.72 (m, 1H)

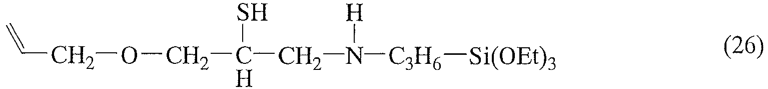

### Examples 6 to 10 and Comparative Examples 1 to 3

110 parts of oil-extended emulsion polymer SBR (#1712 manufactured by JSR), 20 parts of NR (RSS#3 normal grade), 20 parts of carbon black (N234 normal grade), 50 parts of silica (Nipsil AQ manufactured by Nihon Silica Industries), 6.5 parts of an organosilicon compound of Examples 1 to 5 or Comparative Compound A to C, 1 part of stearic acid, and 1 part of antiaging agent 6C (Noclack 6C manufactured by Ouchi Shinko Chemical Industrial Co., Ltd.) were blended to prepare a master batch. To this, 3.0 parts of zinc oxide, 0.5 part of vulcanizing accelerator DM (dibenzothiazyl disulfide), 1.0 part of vulcanizing accelerator NS (N-t-butyl-2-benzothiazolyl sulfenamide), and 1.5 parts of sulfur were added, and the mixture was kneaded to prepare a rubber composition.

Next, the rubber composition before the vulcanization and after the vulcanization under the conditions of 165°C for 30 minutes was measured by the procedure as described below. The results are shown in Tables 1 and 2.

### Physical properties before the vulcanization

### (1) Mooney viscosity

Mooney viscosity was measured according to JIS K 6300 by preheating for 1 minute, and measuring for 4 minutes at a temperature of 130°C, and the result was indicated by an index in relation to Comparative Example 1 at the index of 100. Lower value of the index indicates lower Mooney viscosity, and hence, higher workability.

### Physical properties after the vulcanization

### (2) Dynamic viscoelasticity

Dynamic viscoelasticity was measured by using a viscoelastometer (manufactured by Rheometrix) under the conditions of tensile dynamic strain of 5%, frequency of 15 Hz, and 60°C. The test piece used was a sheet having a thickness of 0.2 cm and a width of 0.5 cm, and the chuck distance was 2 cm with the initial load of 160 g. The value of tan δ was indicated by an index in relation to Comparative Example 1 at the index of 100. Lower value of the index indicates lower hysteresis loss, and hence, lower exothemicity.

### (3) Abrasion resistance

Abrasion resistance was measured according to JIS K 6264-2: 2005 by using Lambourn abrasion tester under the conditions of room temperature and a slip ratio 25%. The result was indicated as the inverse of the abrasion amount by an index in relation to Comparative Example 1 at the index of 100. Larger value of the index indicates smaller abrasion, and hence, higher abrasion resistance.

### Comparative Compound A

(EtO)₃Si-C₃H₆-S₄-C₃H₆-Si(OEt)₃

### Comparative Compound B

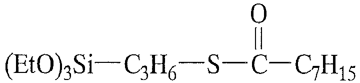

### Comparative Compound C

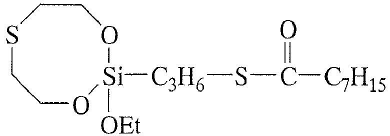

**Table 1**

| Formulation (part by weight) | | Example | | | | |
|---|---|---|---|---|---|---|
| | | 6 | 7 | 8 | 9 | 10 |
| SBR | | 110 | 110 | 110 | 110 | 110 |
| NR | | 20 | 20 | 20 | 20 | 20 |
| Carbon black | | 20 | 20 | 20 | 20 | 20 |
| Silica | | 50 | 50 | 50 | 50 | 50 |
| Stearic acid | | 1 | 1 | 1 | 1 | 1 |
| 6C | | 1 | 1 | 1 | 1 | 1 |
| Zinc oxide | | 3 | 3 | 3 | 3 | 3 |
| DM | | 0.5 | 0.5 | 0.5 | 0.5 | 0.5 |
| NS | | 1 | 1 | 1 | 1 | 1 |
| Sulfur | | 1.5 | 1.5 | 1.5 | 1.5 | 1.5 |
| Compound of Example 1 | | 6.5 | - | - | - | - |
| Compound of Example 2 | | - | 6.5 | - | - | - |
| Compound of Example 3 | | - | - | 6.5 | - | - |
| Compound of Example 4 | | - | - | - | 6.5 | - |
| Compound of Example 5 | | - | - | - | - | 6.5 |
| Physical properties before the vulcanization | Mooney viscosity | 101 | 102 | 101 | 101 | 102 |
| Physical properties after the vulcanization | Dynamic viscoelasticity tan δ (60°C) | 95 | 97 | 98 | 96 | 95 |
| | Abrasion resistance | 103 | 102 | 105 | 104 | 105 |

**Table 2**

| Formulation (part by weight) | | Comparative Example | | |
|---|---|---|---|---|
| | | 1 | 2 | 3 |
| SBR | | 110 | 110 | 110 |
| NR | | 20 | 20 | 20 |
| Carbon black | | 20 | 20 | 20 |
| Silica | | 50 | 50 | 50 |
| Stearic acid | | 1 | 1 | 1 |
| 6C | | 1 | 1 | 1 |
| Zinc oxide | | 3 | 3 | 3 |
| DM | | 0.5 | 0.5 | 0.5 |
| NS | | 1 | 1 | 1 |
| Sulfur | | 1.5 | 1.5 | 1.5 |
| Comparative Compound A | | 6.5 | - | - |
| Comparative Compound B | | - | 6.5 | - |
| Comparative Compound C | | - | - | 6.5 |
| Physical properties before the vulcanization | Mooney viscosity | 100 | 98 | 97 |
| Physical properties after the vulcanization | Dynamic viscoelasticity tan δ (60°C) | 100 | 99 | 98 |
| | Abrasion resistance | 100 | 101 | 101 |

| | | | | |
|---|---|---|---|---|
| Notes (i) In respect of numerical ranges disclosed in the present description it will of course be understood that in the normal way the technical criterion for the upper limit is different from the technical criterion for the lower limit, i.e. the upper and lower limits are intrinsically distinct proposals. (ii) For the avoidance of doubt it is confirmed that in the general description above, in the usual way the proposal of general preferences and options in respect of different features of the compounds, and methods of making and using them, constitutes the proposal of general combinations of those general preferences and options for the different features, insofar as they are combinable and compatible and are put forward in the same context. | | | | |

## Claims

1. An organosilicon compound represented by the following formula (1): 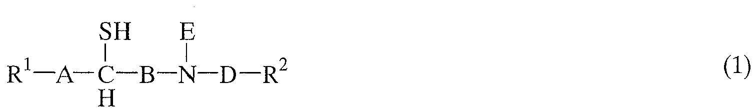 wherein R¹ is a group selected from hydrolyzable silyl group, alkyl group, vinyl group, amino group, mercapto group, and epoxy group, and R² is a group selected from hydrolyzable silyl group, alkyl group, vinyl group, amino group, mercapto group, and epoxy group, with the proviso that at least one of R¹ and R² is a hydrolyzable silyl group represented by the following general formula (2): 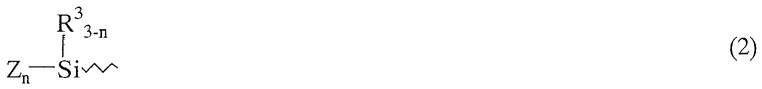 wherein wavy line represents a bond, R³ is independently an alkyl group containing 1 to 10 carbon atoms or an aryl group containing 6 to 10 carbon atoms, Z is independently a halogen atom or -OR⁴ wherein R⁴ is a monovalent hydrocarbon group containing 1 to 20 carbon atoms optionally intervened with oxygen atom or a carbonyl group, and n is an integer of 1 to 3; A, B, and D are independently a substituted or unsubstituted divalent hydrocarbon group optionally intervened with a hetero atom selected from oxygen atom, sulfur atom, and nitrogen atom and/or carbonyl carbon, with the proviso that A and B may together represent a cyclic structure linked by an alkylene group; and E is hydrogen atom or a substituted or unsubstituted monovalent hydrocarbon group optionally intervened with a hetero atom selected from oxygen atom, sulfur atom, and nitrogen atom, or a carbonyl carbon.

2. An organosilicon compound according to claim 1 wherein the amino group of the R¹ and R² is the group represented by the general formula (11), the mercapto group of the R¹ and R² is the group represented by the formula (12), and the epoxy group of the R¹ and R² is the group represented by the general formula (13): 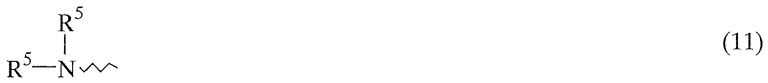 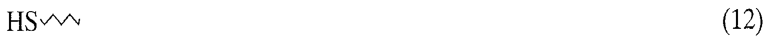 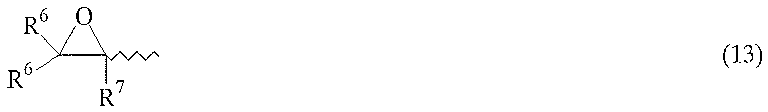 wherein wavy line represents a bond, R⁵ is independently hydrogen atom, an alkyl group containing 1 to 10 carbon atoms, or an aryl group containing 6 to 10 carbon atoms, or two R⁵s may together form a cyclic structure containing 4 to 10 carbon atoms linked by an alkylene group, R⁶ and R⁷ are independently hydrogen atom, an alkyl group containing 1 to 10 carbon atoms, or an aryl group containing 6 to 10 carbon atoms, or R⁶ and R⁷ may together form a cyclic structure containing 4 to 10 carbon atoms linked by an alkylene group.

3. The organosilicon compound according to claim 1 wherein the organosilicon compound is represented by the following formula (3): 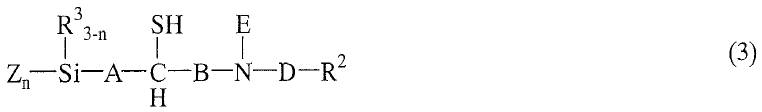 wherein A, B, D, E, Z, R², R³, and n are as defined above.

4. The organosilicon compound according to claim 1 wherein the organosilicon compound is represented by the following formula (4): 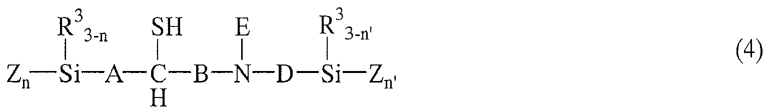 wherein A, B, D, E, and n are as defined above, Z and R³ are independently as defined above, and n' is an integer of 1 to 3.

5. The organosilicon compound according to claim 1 wherein the organosilicon compound is represented by the following formula (5): 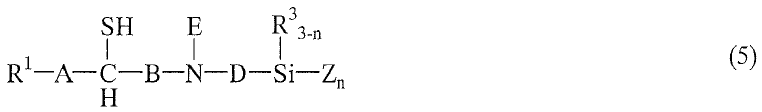 wherein A, B, D, E, Z, R¹, R³, and n are as defined above.

6. An organosilicon compound according to claim 1 wherein the organosilicon compound is selected from the structures represented by the following general formulae (6) to (8): 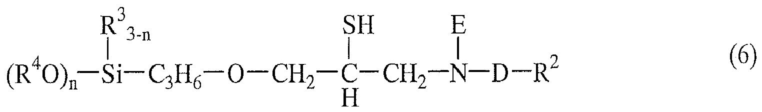 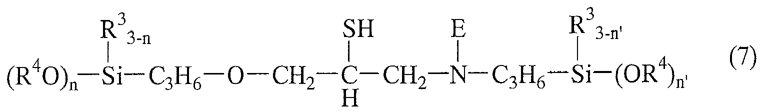 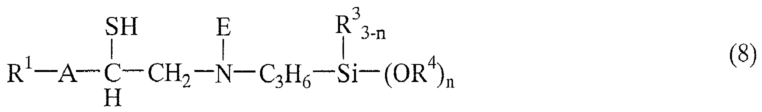 wherein A, D, E, R¹, R², R³, R⁴, and n are as defined above, and n' is an integer of 1 to 3.

7. Organosilicon compound of any one of claims 1 to 6 in which A, B and D are optionally substituted hydrocarbon groups of from 1 to 20 carbon atoms, selected from straight, branched and cyclic alkylene groups, optionally interrupted by -O-, -S-, -N- or -(C=0)-, arylene, and combinations of these.

8. A method for producing an organosilicon compound of any one of claims 1 to 7 comprising the step of
(i) reacting an organosilicon compound containing at least one episulfide group and a compound having at least one primary amino group and/or secondary amino group;
(ii) reacting an organosilicon compound containing at least one primary amino group and/or secondary amino group and a compound having at least one episulfide group, or
(iii) reacting an organosilicon compound containing at least one primary amino group and/or secondary amino group and an organosilicon compound containing at least one episulfide group.

9. A method of claim 8 option (i) or (iii) wherein the organosilicon compound containing at least one episulfide group is at least one selected from compounds of formulae (14) to (17):

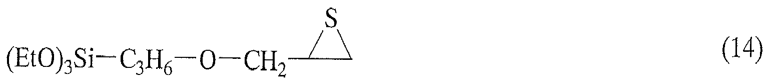

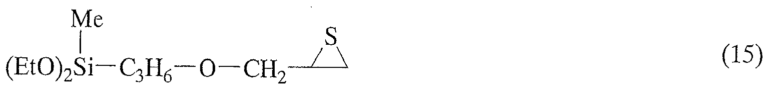

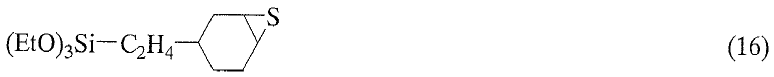

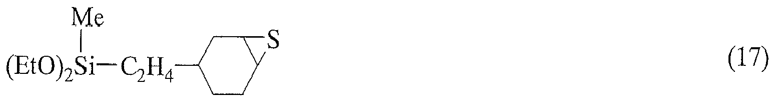

10. A method of claim 8 option (i), or of claim 9 as dependent thereon, wherein the compound having at least one primary amino group and/or secondary amino group is at least one selected from propylamine, isopropylamine, butylamine, isobutylamine, dodecylamine, stearylamine, dibutylamine, dicyclohexylamine and piperazine.

11. A method of claim 8 option (ii) or (iii), or of claim 9 as dependent on claim 8 option (iii), wherein the organosilicon compound containing at least one primary amino group and/or secondary amino group is at least one selected from:
α-aminomethyltrimethoxysilane,
α-aminomethylmethyldimethoxysilane,
α-aminomethyldimethylmethoxysilane,
α-aminomethyltriethoxysilane,
α-aminomethylmethyldiethoxysilane,
α-aminomethyldimethylethoxysilane,
γ-aminopropyltrimethoxysilane,
γ-aminopropylmethyldimethoxysilane,
γ-aminopropyldimethylmethoxysilane,
γ-aminopropyltriethoxysilane,
γ-aminopropylmethyldiethoxysilane,
γ-aminopropyldimethylethoxysilane,
N-2(aminoethyl)α-aminomethyltrimethoxysilane,
N-2(aminoethyl)α-aminomethylmethyldimethoxysilane,
N-2(aminoethyl)α-aminomethyldimethylmethoxysilane,
N-2(aminoethyl)α-aminomethyltriethoxysilane,
N-2(aminoethyl)α-aminomethylmethyldiethoxysilane,
N-2(aminoethyl)α-aminomethyldimethylethoxysilane,
bis-(trimethoxysilylpropyl)amine,
bis-(methyldimethoxysilylpropyl)amine,
bis-(dimethylmethoxysilylpropyl)amine,
bis-(triethoxysilylpropyl)amine,
bis-(methyldiethoxysilylpropyl)amine, and
bis-(dimethylethoxysilylpropyl)amine,

12. A method of claim 8 option (ii), or of claim 11 as dependent thereon, wherein the compound having at least one episulfide group is at least one selected from compounds of the following formulae (18) to (21):

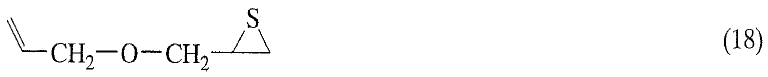

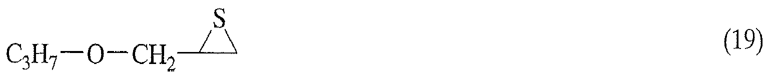

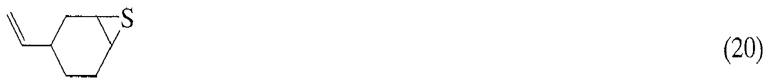

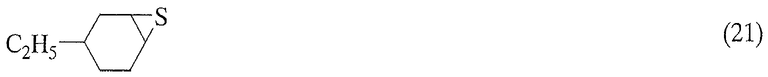

13. A compounding agent for rubber containing an organosilicon compound of any one of claims 1 to 7.

14. A compounding agent for rubber according to claim 13 further comprising
(B) at least one powder, preferably silica, at an amount such that the weight ratio (A)/(B) of the organosilicon compound (A) to the at least one powder (B) is from 70/30 to 5/95.

15. A rubber composition obtainable by blending with a compounding agent for rubber of claim 13 or 14.

16. A tire produced by using a cured product of the rubber composition of claim 15.
